# EUROPEAN PATENT SPECIFICATION

(11) **EP 1 199 860 B1**
(45) Date of publication and mention of the grant of the patent: **04.10.2006**
(21) Application number: 00122560.6
(22) Date of filing: 16.10.2000
(51) Int. Cl.: H04L 29/06, G06F 17/30

(54) **User context information database for plurality of network services**
Informationdatenbank Teilnehmerkontextes für mehreren Netzwerkdienste
Base de données avec d'informations contextuelles sur l'utilisateur de plusieurs services de réseau

(43) Date of publication of application: 24.04.2002
(73) Proprietor: Sony Deutschland GmbH, 10785 Berlin (DE)
(72) Inventor: Kovacs, Erno, c/o Advanced Technology Center Stgt., 70327 Stuttgart (DE); Hohl, Fritz, c/o Advanced Technology Center Stgt., 70327 Stuttgart (DE); Mandato, Davide, c/o Advanced Technology Cent.Stgt, 70327 Stuttgart (DE)
(74) Representative: Rupp, Christian

(56) References cited:
- EP-A- 0 697 670
- US-A- 5 544 321
- US-A- 5 815 665

## Description

The present invention relates to a technique for accessing context information integrated in a service portal by means of multi-user data network, a computer software product for implementing such a services portal, a method for supplying context information to a context database as well as a computer software program for executing such a method.

The general background of the present invention is that small mobile devices will be used in the near future as the general means to access services anywhere and anytime. Service are needed that exploit these technologies. A topic here is the access of mobile users to near-by services. Near-by services are services that exist in the same area as the user. The location of both the user and the services is the key aspect. As we will see, a location is often understood as a network position. Having this point of view, ad-hoc technologies are a means to connect mobile users with services that exist in the network environment. Another interpretation understands location as a geographical position. Therefore, location awareness technologies like global and local positional systems and digital models of the environment offer a means to locate mobile users for location-aware-services. Location aware services are services that take into account the user's position in order to customise their service to a user.

Generally services for mobile devices must be adapted to the current user situation. For instance customers require that the mobile telephone's call indication might be issued to different means, e.g. through silent vibrations while being in a concert or through a direct flashing in a noisy environment. Other examples can be found through network features like call forwarding, universal personal identification numbers, or voice mailboxes. The disadvantages of these mechanisms today are that the user must explicitly request the desired feature from a device or the connected network.

Furthermore, the user must frequently check the status of different network settings. Usually he or she does not have intelligent means of automatically influencing these services. Why the described scenarios are mainly related to telecommunication issues, the same holds true for the currently emerging personalised services in the Internet.

The described issues can be summarised under the phrase of context-aware services. A context-aware service exploits the abilities of future mobile devices to determine automatically or semi-automatically the current context of its user. Based on this information it adapts its services and behaviour to the respective user's needs including personal preferences in the environments capabilities. Furthermore it is possible that sensor units in the environment sense context about a user. Finally, sensors can exist neither in the user's device nor in the current environment of the user, but be located elsewhere.

Common key issues associated with context-aware computing are:
- when to collect and when to distribute context information,
- evaluate which information is central,
- how to effectively distribute this information (especially in a mobile environment),
- to whom to distribute a context information, and
- how to deal best with the available information.

EP 1030494 A1 of Sony International (Europe) GmbH discloses as a communication unit in the communication method with profile management. The communication system thereby comprises a storage means for storing a profile database, that profile database comprising parameter data describing attributes of the communication systems, the parameter data being arranged in parameter sets respectively describing a collection of attributes. The parameter sets are allocated to profile units so that each profile unit comprises at least one parameter set and one parameter set can be allocated to a plurality of profile units. Furthermore managing means for managing that parameter data in the profile database and for controlling means for reading and writing parameter data from and in said storage means are provided.

EP00104259.7 filed on March 01, 2000 in the name of SONY INTERNATIONAL (EUROPE) GmbH describes a method and allows to have different user profile sets for different combinations of e.g. users, devices, network conditions, application situations etc. If for a certain combination no dedicated set of user profile data exists, then default profiles can be used. These default profiles can be set per single user, devices etc. or per combination of these values.

US patent 5,544,321 proposes a network system containing "user agents" and "device agents" that interact with the rest of the system as electronic proxies for the represented user or device, and "name" and "location" services. The user agent collects, and primarily stores, personal information about its user that may include static information like user preferences, modestly dynamic information like personal calendar, or very dynamic information like the current position of the user. The user agent further controls access to the users personal information a service provider may request from a user agent, as prescribed for example by the personal preferences and policies of the user. The name and location services basically contain information in the form of key-value pairs and can be implemented on a known computer host of the network. The particular location service provides a place for storing location specific information and a way of executing queries over that information.

US patent 5,815,665 discloses an online brokering service providing user authentication and billing services to allow users to anonymously and securely purchase online services from service providers sites over a distributed public network. The online broker may store, and make available to the service providers, certain user-specific customisation information that can be used by the service providers to tailor their respective services to individual users. This information may include e.g. user's preferences with respect to the display of certain types of media, or the geographic region at which the user resides.

In view of the above-captioned prior art is the object of the present invention to facilitate the possibility of services to access context information.

The subject is achieved by means of the features of the independent claims. The dependent claims develop further the central idea of the present invention.

Generally the services of a service portal shall be able to access context information integrated in the service portal in an easy and uniform way. The invention solves this problem by using a combination of a context unit and a service portal. This allows services of the portal to access to context information about an entity in a uniform way. Additionally the entity is able to control the access to its context information by the services. Finally the service portal can be used as one source of context information to be inserted in the context unit.

According a first aspect of the present invention, as defined in claim 1, therefore a service portal for accessing context information integrated in the service portal by means of a multi-user data network is provided. The service portal comprises an access unit as a central entry point for different services to access the common service portal. Furthermore, a context database is provided containing context information of users of a service and connected to the access unit such that the context database is accessible for the different services in a uniform and controllable manner.

The access unit has an access policy function that is specified by the users to control the access of the context database by different services.

The access policies can be defined for groups of services and/or individually for each service.

The access policies can have a default value for non-identified services.

The access policies can be stored in a user profile database.

The access unit can have an access monitor function generating an access log. This access log can be retrieved by the user.

A service can query the context database for content in a request/reply interaction.

Alternatively or additionally a service can register with the context database to be notified of changes/updates of the content of the context database.

The context database can be connected to a plurality of context sensors.

The context sensors can comprise basic sensors as well as abstract sensors processing context information of at least one other sensors (basic sensors and/or abstract sensors).

The service portal can have a function to add or remove (dynamically) context sensors to/from the context database.

The service portal can have a sensor configuration unit which can be accessed by the services to query the actual sensor configuration of the services portal.

The service portal can have a sensor catalogue which can be accessed by the services to query the sensors which can be configured at this service portal.

The service portal can have a context deducing unit deducing context information from the context information already present in the context database and for subsequent storage of the deduced context information in the context database.

According to a further aspect of the present invention, as defined in claim 16, a computer software product for implementing a service portal is provided.

According to a still further aspect of the present invention, as defined in claim 17, a method for accessing context information integrated in a service portal is provided . The context information represents information on the context of users in a multi-user data network. At first context information can be gathered by basic sensors. The information of at least one basic sensors is then processed by an abstract sensor and supplied to the context database.

An abstract sensor can furthermore process information of at least one other abstract sensor.

On the basis of context information already present in the context database a further context information can be deduced and stored in the context database. According to a further aspect of the present invention, as defined in claim 21, a computer software program for executing a method is provided.

Further features, advantages and objects of the present invention will become evident for the mans skilled in the art when reading the following detailed explanation of preferred and bodyments of the present invention and taking in conjunction with the figures of the enclosed drawings:
Figure 1 shows the integration of a service portal and a context database according to the present invention,
figure 2 shows the configuration of a basic sensor,
figure 3 shows the configuration of an abstract sensor,
figure 4 shows the units related to a context unit,
figure 5 shows the principal of a service platform, and
figure 6 shows the relationship between applications and a context architecture, wherein arrows indicate the data flow.

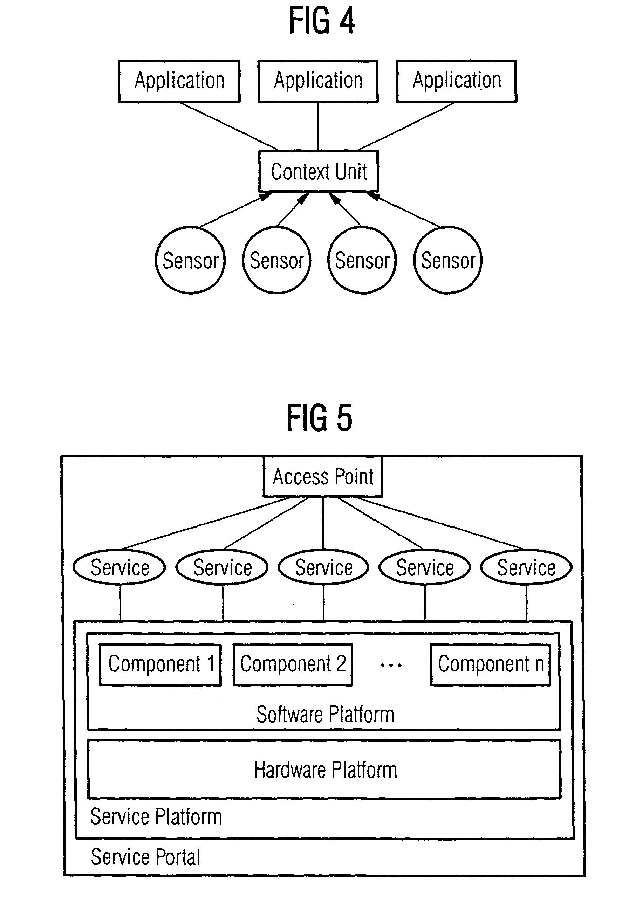

With reference to figure 4 at first a context unit will be explained. A context unit is a logical entity that offer applications to access context data related to a single unit. This unit might be e.g. a mobile human user or a device or an application. Certain entities, the so-called sensors deliver context data to certain context units.

As can be seen from figure 5 a service portal is a logical entity that offers users a single entry point to a number of services which share some knowledge of the user and which might interact to provide combined services (e.g. a calendar service that is able to send messages to a group of people of which addresses are stored in an address book services). Furthermore, a service portal can be a logical entity that offers services the possibility to be requested by users that use that portal and the possibility to use infrastructure means of the portal. A services portal may host only services operated by the portal operators or services operated by third parties and consists of service platform and services that use the platform. The services of a single portal can be accessed starting at a common starting point, e.g. a web page.

A service platform therefore consists of infrastructure components that support services offered at a certain service portal. This infrastructure includes hardware components, but also software components. Software components might comprise e.g. a user database, gateways to communication networks, units that allow output to the user to be adapted according to the used device etc.

Service portals and context units insofar are known general background.

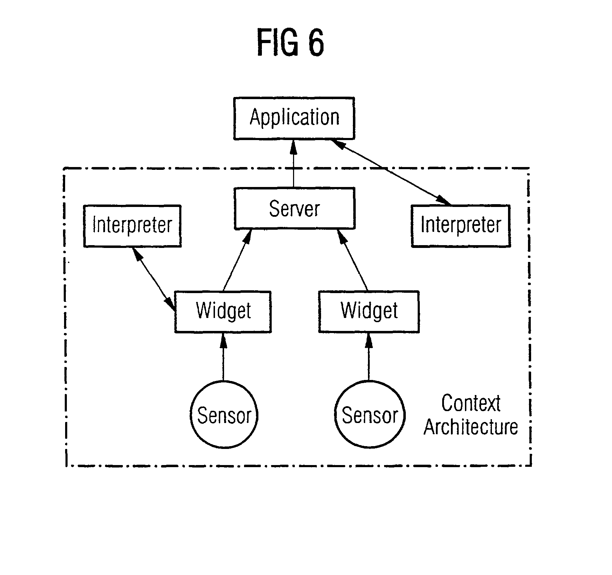

With reference to figure 6 a context technique will now be explained: The context technique presents an architecture that allows applications to uniformly access an open number of context sensors. This is achieved by a having a generic abstraction of a context sensor, the so-called context widget (see figure 6). Context widgets offer all the same interface to applications, such that the applications do not have to cope with the internals of accessing certain context information. Context servers allow to bundle context information which relate to a particular entity, e.g. a person. Context sensors offer the same interface as the widgets they bundle. The advantage of using context servers is that an application has only to interact with one entity instead of all the context widgets. Finally, interpreters allow to deduce information out of a number of context information provided by an application or context widget. The deduced information can then be returned to the component (e.g. application or widget) that called the interpreter.

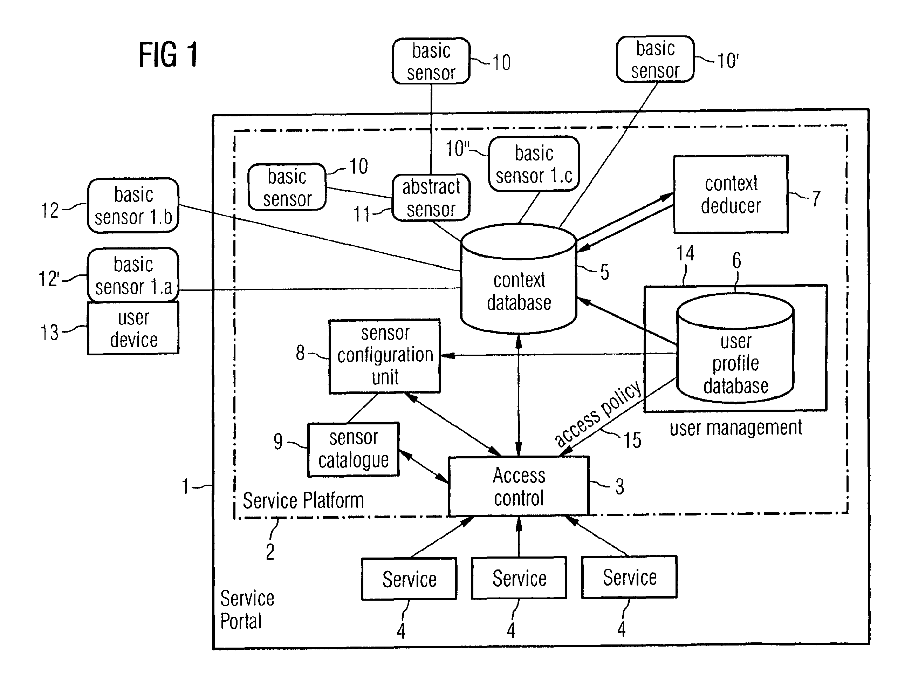

Figure 1 shows the general structure of a service portal according to the present invention. The different services 4 can access a service platform 2 of the service portal 1 by means of a coming entry point, e.g. an access control unit 3. The access control unit 3 controls the access of the different services 4 to a sensor catalogue 9, a sensor configuration unit 8 and a context database 5. The function of these different elements of the service platform 2 will be explained later on.

A service portal according to the present invention can also be referred to as Context-aware Mobile Portal (CAMP).

The access control unit 3 allows the different services 4 or groups of services 4 access to the context database 5, the sensor configuration unit 8 and the sensor catalogue 9 according to an access policy 15 of a user management system 14. Particularly, the access policy 15 of the user management system 14 can be stored in a user profile database 6.

The user profile database 6 supplies information to the context database 5 as well as to the sensor configuration unit 8. Furthermore, the sensor configuration unit 8 and the sensor catalogue 9 exchange information.

The context database 5 gathers context information from different sensors 10, 11, 12 as well as from a context deducer 7. The context deducer 7 deduces additional higher-order context information on the basis of the context information already present in the context database 5, wherein the higher order processed context information is then stored again in the context database 5.

The different context sensors 10, 11, 12 collect context information such as:
- The location of the user,
- date and time at the location of the user,
- the temperature at the location of the user,
- personal user data like his/hers schedule,
- the history of his/hers service usage,
- the actual condition of the network the user connects to,
- the actual condition of the user device,
- the user profile (e.g. age, gender, nationality and user preferences),
- the abilities of the user device,
- the social situation the user currently experiences.

These collected context information is send to a context server, wherein according to the architecture of figure 1 a context database 5 is used as context server. The sensors 10, 11, 12 offer a generic interface to the context server (context database 5).

As can be seen from figure 1, there are two different main types of sensors. Basic sensors 10, 10', 10", 12, 12' sample data such as f.e. the location of the device or the schedule of a human user. Basic sensors might be attached to an entity (user device 13) about which context data is collected (see basic sensor 12'). An example for such a basis sensor 12' is a GPS sensor that sense the position of a user device 13. Other basic sensors 12 can be part of the physical environment, thus sensing environmental data (like the temperature, or the location of a mobile device, "tracking systems").

Finally, basic sensors 10" might be located elsewhere sensing context data like the schedule of the user. These basic sensors might be part of the service portal or can be located outside the services portal (basic sensors 10, 10'). To insert user context data that exists in the service portal 1 for administrative reasons (e.g. user profile data of the user profile data base 6 and the service usage history) normally, basic sensors 10" are used and are connected to the corresponding service portal components.

The context data can be inserted directly into the context data base 5, but often, the data of a number of basic sensors is compiled and processed in a hierarchy of abstract sensors 11 that finally feed the thus processed higher-order context information to the context database 5. Abstract sensors 11 are therefore components of the service platform 2 that are able to process data of a number (one or more) of other sensors (either basic sensors or other abstract sensors), thus producing context data sent as an higher order information to the context database 5 and stored therein. From a view point of the context database 5, also abstract sensors 11 are sensors they offer the same generic interface as the other (basic) sensors. One example of an abstract sensor 11 is a "Location Manager" that collects information about the position of a user from different sources, selects "better" sources and combines the information of different sources, thus generating a more accurate user position.

Some context information is not sensed, but deduced by a context deducer 7 from some information already present in the context database 5. A social situation deducer, e.g. determines whether a user is in a meeting by searching the schedule information in the context database 5. A transmission cost deducer might e.g. determine that the power sent to the user has to be reduced due to the fact that the user calls from overseas and that the transmission costs therefore are high. As the result is also context information, a context deducer 7 inserts the deduced information again in the context database 5 for storage.

Due to the access control unit 3 different services 4 can access the data stored in the context database 5 in a controllable and uniform manner. There are two ways to access such data. First, a service 4 can query the context database 5 for values (e.g. by using a key to get values), which are then returned to the service 4. This is called request-reply interaction mode. According to a second mode a service 4 can subscribe itself at the context database 5 for changes and/or updates of certain fields of the context database 5. In case of such a change, the context database 5 then sends the new (updated) values to the corresponding service 4. The mode is known as publish-subscribe interaction.

Services 4 cannot only query context data from the context database 5, but can also be able to insert date into the context database 5. (A service might e.g. want to add the name of a file to the context of a user which has accessed a file lately).

An important issue is the control of the access to the context datastore and the context database 5. As often context data are privacy sensitive information, the access to such kind of data by services 4 has to be controllable, especially in the case of context data relating to human users. This access comprises read and write access to context data. Therefore access policies 15 can be specified describing which service 4 is able to get access on which context information and in which way. In order to prevent the user from specifying a lot of details in a such access policy 15, the context data can be grouped, so access statements can relate to a whole group of context data. The controlling entity, the access controlling unit 3, is additionally able to specify a default access policy 15, so it does not need to specify policies for every group of services and/or context data in the context database.

As new sensors might introduce new context data into the context database 5 and as new services might be installed at the service portal 1, there might be a need for extending the access policies 15. is one way to cope with that situation is the usage of default policies as described. As the access policy is part of the user profile information, also this policy can be stored in the user profile database 6.

To allow the user to monitor the accesses to his/her context by services 4, the context access control unit 3 maintains an access monitor (not shown in figure 1) generating an access log. The user can then read the entries of this log to survey the context accesses of the different services 4.

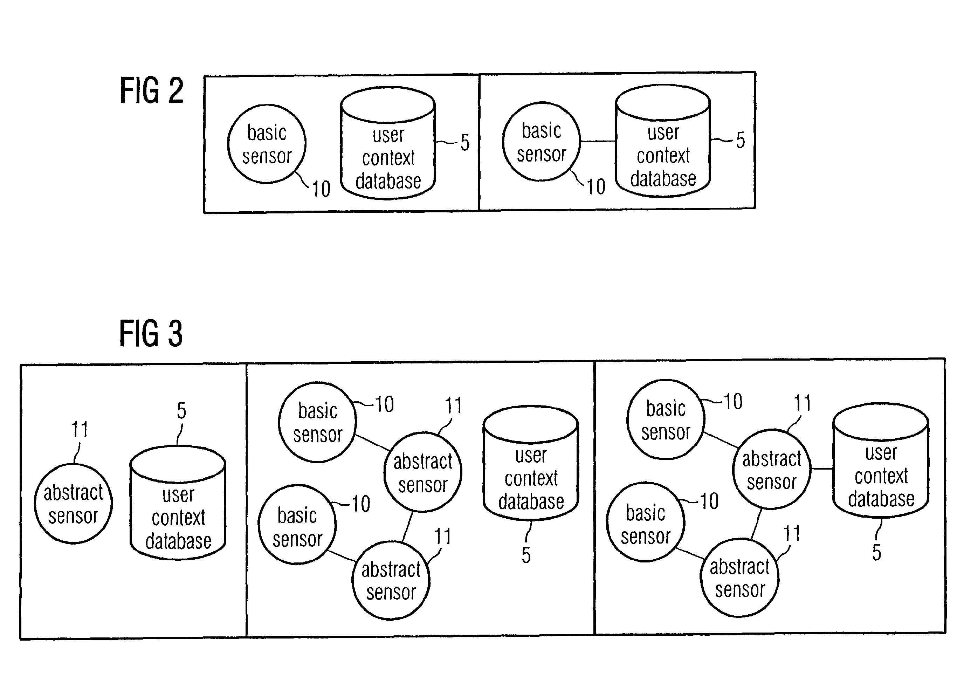

In the following the configuration process of the sensor hierarchy will be explained with reference to figures 2 and 3.

In order to deliver data to the context database 5, the sensor hierarchies have to be configured, i.e. established and logically connected. The configuration takes place if an entity (normally a component of the service platform 2) decides to start to a sensor. If this sensor is a basic sensor 10, 12, the sensor is simply connected to the context database 5 (see figure 2). If this sensor is an abstract sensor, the sensor is established. If this sensor uses a hierarchy, this hierarchy is configured until finally all used basic sensors 10, 12 are connected to the corresponding abstract sensor 11. Finally the top level abstract sensor 11 is connected to the context database 5 (see figure 3). The configuration is done by means of a sensor figuration unit 8 (see figure 1), which is a component of the services platform 2.

Sensors can be distinguished according to the period they shall deliver data to the context database 5. Some sensors shall always deliver data, even if the user is not connected to the service portal 1. This might be the case e.g. for location information. Other sensors shall be active only during the period the user is connected to the service portal 1 (e.g. in the case of a user profile sensor). Finally, a third group of sensors shall be used only during certain periods of the time duration the user is connected to the network. Additionally, a service 4 that is installed at the service portal 1 may ask the service platform to configure a new sensor. The service can inform itself about the sensors that can be configured at this service portal 1 by consulting a sensor catalogue unit 9 connected to the sensor configuration unit 8. The sensor catalogue unit 9 is another service platform component, which can be accessed by the access control unit 3.

When services are started, they might want to learn about the actual sensor configuration in order to select context data to be used. To that end, services can query the sensor configuration unit 8 by an access by means of the access control unit 3. After a service has been started, it might be the case that new sensors are connected to the service platform 2 or that existing sensors are disconnected (e.g. in case of a technical failure). In this case the services 4 have to be informed about the change. This can be done either when the services ask for context data from a disconnected sensor. In this case a special error message is returned. If the service has subscribed for that data, a message can be submitted that state the disconnection of the sensor. In the case of a new sensor, services 4 can be informed using a message by the service platform 2. In this case, the service platform 2 automatically issues a new sensor instalment message to registered services 4. Some sensors of hierarchy might change over time, e.g. in the case of location sensors installed in a building (tracking system) the sensor depends on the position of a user. These changes are handled by abstract sensors 11, which hide this dynamics from the context database 5. The exact mechanisms that allow appearing and disappearing of basic sensors 10, 12 to communicate with abstract sensors 11 depend on the nature of the context data.

Examples of services 4 using the aforementioned architecture are e.g.:
- location services that are able to display the current location of a certain user,
- projecting services that select video projectors according to the room the user is currently located at,
- services that adapt their output according to the current context of the user, e.g. the device used, the network condition, the location of the user etc., and
- background lit display that use a service to determine the light level at the current position of the user in order to adapt the light level of the display. This results in brighter displays used outside during the night and no background lit in bright rooms.

In the following some typical processes performed in connection with the present invention will be explained:

### A context value is entered into the context database 5:

When the context changes (e.g. before the user is moving), and a context sensor 10, 11, 12 senses such a change, the corresponding basic sensor 10, 12 sends a message to the next sensor in the hierarchy (if any). This sensor can be an abstract sensor 11 and can use this data to compute a value that is sent to the next sensor and so on until the top level sensor is reached. This top level sensor sends the value to the context database 5 where it is stored under a certain key- In case there is a service 4 that has subscribed for that key, the context database 5 generates a message containing the key and the value to that service.

### A service 4 requests a context database value:

If a service requests a value from the context database 5, the access control unit 3 checks whether there is an access policy 15 that allows or prevents this access. This check is therefore effected dependent on the kind of service and the kind of context data requested. Therefore the kind of service as well as the kind of context data are parameters of the access policy. If the check is positive, the corresponding action is taken. If not, the access control unit 3 checks whether there is an default policy that can be applied. If so, the corresponding action is taken. If not, and the concerned entity is not a human user, the request is denied. If not, and the concerned entity is a human user, the answer is postponed until the user was asked for a decision, which is then applied. Therefore in the last case the user has the possibility to decide himself whether he wants the service 4 to access the corresponding context data or not.

### A service wants to subscribe for a certain context database key:

In this case the above explained mechanism for a request is applied, but this time concerning the subscription, not the request of the value. If the access control unit yields a positive answer, the checking process does not have to be done for every publication of a value.

The present invention therefore has the advantages, that using the context information, the services 4 of a service portal 1 are able to adapt the service provisioning and the presentation to the user accordingly. The more context a service 4 can access, the better the service can adapt to the current situation of the user.

Providing some context information or combined context information itself is a service 4 that can be offered to the user of a service portal 1. Therefore, services 4 that provide this information can be created more easily.

As the context infrastructure is offered by the service portal 1 to all services 4, these services 4 do not have themselves to select a context mechanism and to discover context servers (such as for example the context database 5 of the present invention).

Context information about a user that already exists (e.g. the user's preferences) in the service portal 1, can be used by the context server (context database 5). Therefore, also these information can be gathered like other context information by the services 4 as a uniform way.

The context server mechanism allows an entity to control the access to the context information by services. It also allows for dynamically adding new and removing existing sensors to a context server (context database 5).

Finally, it allows units to use and process the data of a number of sensors before entering it into the context server (context database 5).

## Claims

1. Service portal for offering central access to services and for accessing context information integrated in the service portal by means of a multi-user data network, comprising:
- an access unit (3) as a central entry point for different services (4) of the network to access the common service portal (1), and
- a context database (5) containing context information of users of a service, and connected to the access unit (3) such that the context database (5) is accessible by the different services (4),
**characterised in that**
the access unit (3) has an access policy function (15) that is specified by the users for controlling the access by the different services (4) to the context database (5).

2. Service portal according to claim 1,
**characterized in that**
the access policies (15) can be defined for groups of services and/or individually for each service.

3. Service portal according to anyone of the preceding claims,
**characterized in that**
the access policies (15) have a default value for not specified services.

4. Service portal according to anyone of the preceding claims,
offering central access to services and for
**characterized in that**
the access policies (15) can be defined for groups of context data in the context database (5).

5. Service portal according to anyone of the preceding claims,
**characterized in that**
the access policies (15) are stored in a user profile database (6).

6. Service portal according to anyone of the preceding claims,
**characterized in that**
the access unit (3) has an access monitor function generating an access log.

7. Service portal according to anyone of the preceding claims,
**characterized in that**
a service (4) can query the context database (5) for content in a request/reply interaction.

8. Service portal according to anyone of claims 1 to 7,
**characterized in that**
a service (4) can register with the context database (5) to be notified of changes of the content of the context database (5).

9. Service portal according to anyone of the preceding claims,
**characterized in that**
the context database (5) is connected to a plurality of context sensors (10, 11, 12).

10. Service portal according to claim 9,
**characterized in that**
the context sensors comprise basic sensors (10, 12) as well as abstract sensors (11) processing context information of at least one other context sensor.

11. Service portal according to claim 9 or 10,
**characterized by**
a function to add or remove context sensors (10, 11, 12) to/from the context database (5).

12. Service portal according to anyone of claims 9 to 11,
**characterized by**
a sensor configuration unit (8) which can be accessed by the services (4) to query the actual sensor configuration of the service portal (1).

13. Service portal according to anyone of claims 9 to 12,
**characterized by**
a sensor catalogue (9) which can be accessed by the services (4) to query the sensors (10, 11, 12) which can be configured at this service portal (1).

14. Service portal according to anyone of the preceding claims,
**characterized by**
a context deducing unit (7) deducing context information from the context information already present in the context database (5).

15. Service portal according to anyone of the preceding claims,
**characterized in that**
services (4) can insert information in the context database (5) by means of the access control unit (3).

16. Computer software product for implementing a service portal according to anyone of the preceding claims.

17. Method for accessing context information integrated in a service portal, offering central access to services, by means of a multi-user data network, wherein:
- different services (4) of the network access the common service portal (1) via an access unit (3) of the service portal (1), and
- the different services (4) access context information of a context database (5) of the service portal (1), said context database (5) containing context information of users of a service and being connected to the access unit (3),
**characterised in that**
the access unit (3) controls the access of the different services (4) to the context database (5) by means of an access policy function (15) that is specified by the users.

18. Method according to claim 17,
**characterized in that**
context information, which represents information on the context of users in the multi-user data network, is supplied to the context database (5) of the service portal (1) by following steps:
- gathering context information by basic sensors (10, 12),
- processing the information of at least one basic sensors by an abstract sensor (11), and
- supplying the processed information of the abstract sensor (11) to the context database (5).

19. Method according to claim 18,
**characterized in that**
an abstract sensor (11) furthermore processes information of at least one other abstract sensor (11).

20. Method according to any of claims 17 to 19,
**characterized in that**
on the basis of context information already present in the context database (5), further context information is deduced (7) and stored in the context database (5).

21. Computer software program for executing a method according to anyone of claims 17 to 20 when run on a computing device.

## Patentansprüche

1. Serviceportal für das Anbieten eines zentralen Zugriffs auf Dienste und zum Zugreifen auf in das Serviceportal integrierte Kontextinformationen mittels eines Mehrbenutzer-Datennetzes.
- mit einer Zugriffseinheit (3) als einem zentralen Eingangspunkt für verschiedene Dienste (4) des Netzes zum Zugreifen auf das gemeinsame Serviceportal (1) und
- mit einer Kontextdatenbank (5), die Kontextinformationen eines Dienstes enthält und mit der Zugriffseinheit (3) verbunden ist, so daß durch die verschiedenen Dienste (4) auf die Kontextdatenbank (5) zugegriffen werden kann,
**dadurch gekennzeichnet,**
**daß** die Zugriffseinheit (3) eine Zugriffsrichtlinienfunktion (15) besitzt, die durch die Benutzer spezifiziert wird, um den Zugriff auf die Kontextdatenbank (5) durch die verschiedenen Dienste (4) zu steuern.

2. Serviceportal nach Anspruch 1,
**dadurch gekennzeichnet,**
**daß** die Zugriffsrichtlinien (15) für Gruppen von Diensten und/oder für jeden Dienst individuell definiert werden können.

3. Serviceportal nach einem der vorhergehenden Ansprüche,
**dadurch gekennzeichnet,**
**daß** die Zugriffsrichtlinien (15) einen Vorgabewert für nicht spezifizierte Dienste haben.

4. Serviceportal nach einem der vorhergehenden Ansprüche,
**dadurch gekennzeichnet,**
**daß** die Zugriffsrichtlinien (15) für Gruppen von Kontextdaten in der Kontextdatenbank (5) definiert werden können.

5. Serviceportal nach einem der vorhergehenden Ansprüche,
**dadurch gekennzeichnet,**
**daß** die Zugriffsrichtlinien (15) in einer Benutzerprofil-Datenbank (6) gespeichert sind.

6. Serviceportal nach einem der vorhergehenden Ansprüche,
**dadurch gekennzeichnet,**
**daß** die Zugriffseinheit (3) eine Zugriffsüberwachungsfunktion hat, die ein Zugriffsprotokoll erzeugt.

7. Serviceportal nach einem der vorhergehenden Ansprüche,
**dadurch gekennzeichnet,**
**daß** ein Dienst (4) in einer Frage-/Antwort-Interaktion die Kontextdatenbank (5) nach Inhalten abfragen kann.

8. Serviceportal nach einem der Ansprüche 1 bis 7,
**dadurch gekennzeichnet,**
**daß** ein Dienst (4) sich bei der Kontextdatenbank (5) anmelden kann, um über Änderungen des Inhalts der Kontextdatenbank (5) benachrichtigt zu werden.

9. Serviceportal nach einem der vorhergehenden Ansprüche,
**dadurch gekennzeichnet,**
**daß** die Kontextdatenbank (5) mit mehreren Kontextsensoren (10, 11, 12) verbunden ist.

10. Serviceportal nach Anspruch 9,
**dadurch gekennzeichnet,**
**daß** die Kontextsensoren Basissensoren (10, 12) umfassen sowie abstrakte Sensoren (11), die Kontextinformationen zumindest eines anderen Kontextsensors verarbeiten.

11. Serviceportal nach einem der Ansprüche 9 oder 10,
**gekennzeichnet durch**
eine Funktion zum Hinzufügen oder Entfernen von Kontextsensoren (10, 11, 12) zu/aus der Kontextdatenbank (5).

12. Serviceportal nach einem der Ansprüche 9 bis 10,
**gekennzeichnet durch**
eine Sensorkonfigurationseinheit (8), auf die **durch** die Dienste (4) zugegriffen werden kann, um die aktuelle Sensorkonfiguration des Serviceportals (1) abzufragen.

13. Serviceportal nach einem der Ansprüche 9 bis 12,
**gekennzeichnet durch**
einen Sensorkatalog (9), auf den **durch** die Dienste (4) zugegriffen werden kann, um die Sensoren (10, 11, 12) abzufragen, die in diesem Serviceportal (1) konfiguriert werden können.

14. Serviceportal nach einem der vorhergehenden Ansprüche,
**gekennzeichnet durch**
eine Kontextherleitungseinheit (8), die Kontextinformationen aus den in der Kontextdatenbank (5) bereits vorhandenen Kontextinformationen herleitet.

15. Serviceportal nach einem der vorhergehenden Ansprüche,
**dadurch gekennzeichnet,**
**daß** Dienste (4) mit Hilfe der Zugriffseinheit (3) Informationen in die Kontextdatenbank (5) einfügen können.

16. Computersoftwareprodukt zum Implementieren eines Serviceportals nach einem der vorhergehenden Ansprüche.

17. Verfahren für das Anbieten eines zentralen Zugriffs auf Dienste und zum Zugreifen auf in ein Serviceportal integrierte Kontextinformationen mittels eines Mehrbenutzer-Datennetzes, wobei
- verschiedene Dienste (4) des Netzes auf das gemeinsame Serviceportal (1) über eine Zugriffseinheit (3) des Serviceportals (1) zugreifen und
- die verschiedenen Dienste (4) auf die Kontextinformationen einer Kontextdatenbank (5) des Serviceportals (1) zugreifen, wobei die Kontextdatenbank (5) Kontextinformationen von Benutzern eines Dienstes enthält und mit der Zugriffseinheit (3) verbunden ist,
**dadurch gekennzeichnet,**
**daß** die Zugriffseinheit (3) den Zugriff der verschiedenen Dienste (4) auf die Kontextdatenbank (5) mittels einer Zugriffsrichtlinienfunktion (15) steuert, die durch die Benutzer spezifiziert wird.

18. Verfahren nach Anspruch 17,
**dadurch gekennzeichnet,**
**daß** Kontextinformationen, die Informationen über den Kontext von Benutzern in dem Mehrbenutzer-Datennetz repräsentieren, der Kontextdatenbank (5) des Serviceportals (1) durch die folgenden Verfahrensschritte zugeführt werden:
- Sammeln von Kontextinformationen durch Basissensoren (10, 12)
- Verarbeiten der Informationen wenigstens eines der Basissensoren durch einen abstrakten Sensor (11) und
- Liefern der verarbeiteten Informationen des abstrakten Sensors (11) an die Kontextdatenbank (5).

19. Verfahren nach Anspruch 18,
**dadurch gekennzeichnet,**
**daß** ein abstrakter Sensor (11) darüber hinaus die Informationen wenigstens eines weiteren abstrakten Sensors (11) verarbeitet.

20. Verfahren nach einem der Ansprüche 17 bis 19,
**dadurch gekennzeichnet,**
**daß** auf der Basis der in der Kontextdatenbank (5) bereits vorhandenen Kontextinformationen weitere Kontextinformationen hergeleitet (7) und in der Kontextdatenbank (5) gespeichert werden.

21. Computersoftwareprogramm zur Durchführung eines Verfahrens nach einem der Ansprüche 17 bis 20, wenn es auf einer Rechenvorrichtung abläuft.

## Revendications

1. Portail de services pour assurer un accès central à des services et pour accéder à une information de contexte intégrée dans le portail de services au moyen d'un réseau de données multi-utilisateur, comprenant :
une unité d'accès (13) en tant que point d'entrée central pour que différents services (4) du réseau accèdent au portail de services commun (1); et
une base de données de contextes (5) qui contient une information de contexte d'utilisateurs d'un service et qui est connectée à l'unité d'accès (3) de telle sorte que la base de données de contextes (5) puisse être accédée par les différents services (4),
**caractérisé en ce que** :
l'unité d'accès (3) comporte une fonction de police d'accès (15) qui est spécifiée par les utilisateurs pour commander l'accès par les différents services (4) à la base de données de contextes (5).

2. Portail de services selon la revendication 1, **caractérisé en ce que** les polices d'accès (15) peuvent être définies pour des groupes de services et/ou de façon individuelle pour chaque service.

3. Portail de services selon l'une quelconque des revendications précédentes, **caractérisé en ce que** les polices d'accès (15) présentent une valeur par défaut pour des services non spécifiés.

4. Portail de services selon l'une quelconque des revendications précédentes, **caractérisé en ce que** les polices d'accès (15) peuvent être définies pour des groupes de données de contexte dans la base de données de contextes (5).

5. Portail de services selon l'une quelconque des revendications précédentes, **caractérisé en ce que** les polices d'accès (15) sont stockées dans une base de données de profils d'utilisateur (6).

6. Portail de services selon l'une quelconque des revendications précédentes, **caractérisé en ce que** l'unité d'accès (3) comporte une fonction de surveillance d'accès qui génère un archivage d'accès.

7. Portail de services selon l'une quelconque des revendications précédentes, **caractérisé en ce qu'**un service (4) peut interroger la base de données de contexte (5) quant à un contenu selon une interaction requête/réponse.

8. Portail de services selon l'une quelconque des revendications 1 à 7, **caractérisé en ce qu'**un service (4) peut s'enregistrer avec la base de données de contextes (5) pour recevoir notification de modifications du contenu de la base de données de contextes (5).

9. Portail de services selon l'une quelconque des revendications précédentes, **caractérisé en ce que** la base de données de contextes (5) est connectée à une pluralité de capteurs de contexte (10, 11, 12).

10. Portail de services selon la revendication 9, **caractérisé en ce que** les capteurs de contexte comprennent des capteurs de base (10, 12) de même que des capteurs d'abrégé (11) traitant une information de contexte d'au moins un autre capteur de contexte.

11. Portail de services selon la revendication 9 ou 10, **caractérisé par** une fonction pour ajouter ou enlever des capteurs de contexte (10, 11, 12) sur/depuis la base de données de contextes (5).

12. Portail de services selon l'une quelconque des revendications 9 à 11, **caractérisé par** une unité de configuration de capteur (8) qui peut être accédée par les services (4) pour interroger la configuration de capteurs réelle du portail de services (1).

13. Portail de services selon l'une quelconque des revendications 9 à 12, **caractérisé par** un catalogue de capteurs (9) qui peut être accédé par les services (4) pour interroger les capteurs (10, 11, 12) qui peuvent être configurés au niveau de ce portail de services (1).

14. Portail de services selon l'une quelconque des revendications précédentes, **caractérisé par** une unité de déduction de contexte (7) qui déduit une information de contexte à partir de l'information de contexte qui est déjà présente dans la base de données de contextes (5).

15. Portail de services selon l'une quelconque des revendications précédentes, **caractérisé en ce que** des services (4) peuvent insérer une information dans la base de données de contextes (5) au moyen de l'unité de commande d'accès (3).

16. Produit de logiciel d'ordinateur pour la mise en oeuvre d'un portail de services selon l'une quelconque des revendications précédentes.

17. Procédé pour accéder à une information de contexte intégrée dans un portail de services qui assure un accès central à des services au moyen d'un réseau de données multi-utilisateur, dans lequel :
différents services (4) du réseau accèdent au portail de services commun (1) via une unité d'accès (3) du portail de services (1);et
les différents services (4) accèdent à une information de contexte d'une base de données de contextes (5) du portail de services (1), ladite base de données de contextes (5) contenant une information de contexte d'utilisateurs d'un service et étant connectée à l'unité d'accès (3),
**caractérisé en ce que** :
l'unité d'accès (3) commande l'accès des différents services (4) sur la base de données de contextes (5) au moyen d'une fonction de police d'accès (15) qui est spécifiée par les utilisateurs.

18. Procédé selon la revendication 17, **caractérisé en ce qu'**une information de contexte qui représente une information concernant le contexte d'utilisateurs dans le réseau de données multi-utilisateur est appliquée sur la base de données de contextes (5) du portail de services (1) au moyen des étapes qui suivent :
collecte d'une information de contexte par des capteurs de base (10, 12) ;
traitement de l'information d'au moins un capteur de base au moyen d'un capteur d'abrégé (11) ; et
application de l'information traitée du capteur d'abrégé (11) sur la base de données de contextes (5).

19. Procédé selon la revendication 18, **caractérisé en ce qu'**un capteur d'abrégé (11) traite en outre une information d'au moins un autre capteur d'abrégé (11).

20. Procédé selon l'une quelconque des revendications 17 à 19, **caractérisé en ce que**, sur la base d'une information de contexte qui est déjà présente dans la base de données de contextes (5), une autre information de contexte est déduite (7) et est stockée dans la base de données de contextes (5).

21. Programme de logiciel d'ordinateur pour exécuter un procédé selon l'une quelconque des revendications 17 à 20 lorsqu'il est déroulé sur un dispositif de calcul.
